(19) Europäisches Patentamt
European Patent Office
Office européen des brevets

(11) **EP 1 733 949 B1**

(12) **EUROPEAN PATENT SPECIFICATION**

(45) Date of publication and mention
of the grant of the patent:
**21.12.2011 Bulletin 2011/51**

(51) Int Cl.:
**B62D 1/06** *(2006.01)*      **F16F 9/06** *(2006.01)*
**F16F 15/16** *(2006.01)*

(21) Application number: **06115331.8**

(22) Date of filing: **12.06.2006**

(54) **A vibration damping steering wheel**

Schwingungsdämpfendes Lenkrad

Volant amortissant les vibrations

(84) Designated Contracting States:
**DE GB SE**

(30) Priority: **13.06.2005 US 151383**

(43) Date of publication of application:
**20.12.2006 Bulletin 2006/51**

(73) Proprietor: **Ford Global Technologies, LLC
Dearborn, MI 48126 (US)**

(72) Inventors:
• **Daly, Mark
Novi, MI 48374 (US)**

• **Schroeder, John
Redford, MI 48239 (US)**

(74) Representative: **Messulam, Alec Moses
Harrison IP
1st Floor, Box Tree House
Northminster Business Park
Northfield Lane
York, YO26 6QU (GB)**

(56) References cited:
EP-A1- 0 414 300      WO-A1-2005/073051
WO-A2-2004/007989      WO-A2-2005/123482
US-A1- 2004 050 203

## Description

The present invention relates generally to tuned dynamic absorbers and, in particular, to a steering wheel dynamic absorber assembly.

It is known that when a sinusoidal force acts on a lightly damped mass-spring system, and the forcing frequency equals the natural frequency of the system, the response grows to large amplitudes. This kind of large amplitude response is called resonance, and can be very troublesome for vibrating systems. When an absorbing mass-spring system is attached to the main mass and the resonance of the absorber is tuned to match that of the main mass, the vibration of the main mass is reduced at its resonance frequency. Therefore, the energy of the main mass is "absorbed" by the tuned dynamic absorber.

Steering wheel nibble or rotational vibration is a customer concern in many production automobiles today. In some vehicles steering wheel nibble is the result of the chassis system responding to the tire and wheel force variations which eventually feed back in the form of slight rotations in the steering system. Original equipment manufacturers and their suppliers are investigating chassis modifications to address and reduce the steering wheel nibble. However, these modifications often have negative effects on other vehicle characteristics and cost. Packaging difficulties and excessive weight penalties have traditionally made the application of tuned absorbers undesirable. Packaging difficulties have led to solutions in the steering wheel hub such as U.S. Patent No. 6296416.

However, a larger mass becomes necessary in order to attenuate the range of nibble experienced. A robust system needs expanded range in order to handle both large and small excitations. In a tuned absorber when the mass is small, the spring must be small as well. In those cases, the stiction which represents the friction between the mass and the housing on which the mass might move has to be overcome before the tuned absorber can work affectively. In some systems this phenomenon can result in inconsistent performance during small excitations.

Solutions housed in the rim have also been proposed. For example, U.S. Patent Application Publication 2004/0050203 to Oblizajek et al., discloses a steering wheel dynamic absorber assembly. The chord length of the circumference of an average steering wheel is more than 1100 mm. However, the travel for most mechanical damper systems is often only between 5 and 10 mm, at which point the mass usually comes in contact with an abrupt non-linearity that restricts its travel therefore limiting the effectiveness.

During manufacturing of conventional steering wheels, a coating is attached to an exterior surface of the steering wheel rim. Similarly, in the Oblizajek design, the inertial ring and the support flexures (dynamic absorber components) must be protected by a protective cover during application of the coating to allow all for proper operation of the dynamic absorber. Unfortunately, the additional mechanical parts can cause increased rattles and noise.

There have previously been proposed steering wheels having a chamber containing a liquid. In EP 0 414 300 which discloses the preamble of claim 1, in order to reduce the mass inertial moment, the steering wheel rim (4), which is of tubular cross-section of a skeleton construction, is partially filled with a fluid medium (6).

WO2005/073051 published 11. august 2005 discloses a steering wheel of which the outer rim has one or more intenal chambers. A liquid, such as antifreeze, is disposed within the internal chamber, the volume, viscosity, and weight of the fluid being selected to dampen vibrations of the steering wheel caused by operation of the vehicle and/or to achieve a desired inertia level in the steering wheel. the steering wheel.

WO2005/132482 published 29. december 2005 discloses a vibration-cushioned vehicle steering wheel comprising a steering wheel carcass and a steering wheel covering, and at least one container, which is located inside the steering wheel and contains at least one displaceable body immersed in a fluid to act as a vibration cushion.

It is an object of this invention to provide a low cost damper that will reduce steering wheel nibble at a given frequency and that can be made integral to the steering wheel rim without adversely affecting other vehicle system attributes.

According to the invention there is provided a steering wheel assembly having a tuned absorber for damping vibration comprising a hub, a rim connected to the hub by a plurality of spokes extending between the hub and the rim, a hollow tube extending around the rim and a liquid located inside the hollow tube to serve as a mass, characterised in that a rigid plug is positioned inside the hollow tube to serve as a barrier, and a gaseous substance is interposed within the hollow tube between the liquid and the plug, the gaseous substance serving as a spring acting between the plug and the liquid.

Preferred features of the invention are set forth in the appended dependent claims.

One advantage of the present invention is that it packages in the circumference of the steering wheel rim maximizing the ratio of nibble attenuation per mass added to the system.

Another advantage is that the steering wheel assembly is easily integrated into a conventional manufacturing process because the application of steering wheel coatings during the manufacturing process for a steering wheel does not interfere with the tuned absorber performance.

Further advantages of a steering wheel assembly constructed in accordance with the invention are that it has improved NVH characteristics compared to a mechanical tuned absorber system by using significantly fewer parts which account for reduced opportunities for squeak, rattle or noise. It also has an expanded performance range to handle both large and small excitations by eliminating the challenge of stiction from the system. The liquid mass of the fluid damper can travel back and forth with amplitudes many times that of the excitation amplitude compared to conventional mechanical systems without experiencing an abrupt end-of-travel stop.

The invention will now be described by way of example with reference to the accompanying drawing of which:-

Figure 1 is a perspective view of a steering wheel assembly in accordance with the present invention;

Figure 2 is a cross sectional view of a steering wheel assembly in accordance with the present invention;

Figure 3 is a graphical representation of the present invention as a spring;

Figure 4 is a cross sectional view of a steering wheel assembly in accordance with the present invention having a hollow non-structural member in accordance with the present invention;

Figure 5 is a perspective view of an alternative embodiment of the steering wheel assembly in accordance with the present invention;

Figure 6 is a perspective view of an alternative embodiment of the steering wheel assembly in accordance with the present invention;

Figure 7 is a perspective view of an alternative embodiment of the steering wheel assembly in accordance with the present invention;

Figure 8 is a perspective view of an alternative embodiment of the steering wheel assembly having a trap in accordance with the present invention;

Figure 9 is a perspective view of the trap shown in Fig.8;

Figure 10 is a longitudinal cross sectional view of the trap; and

Figure 11 is an end view of the trap.

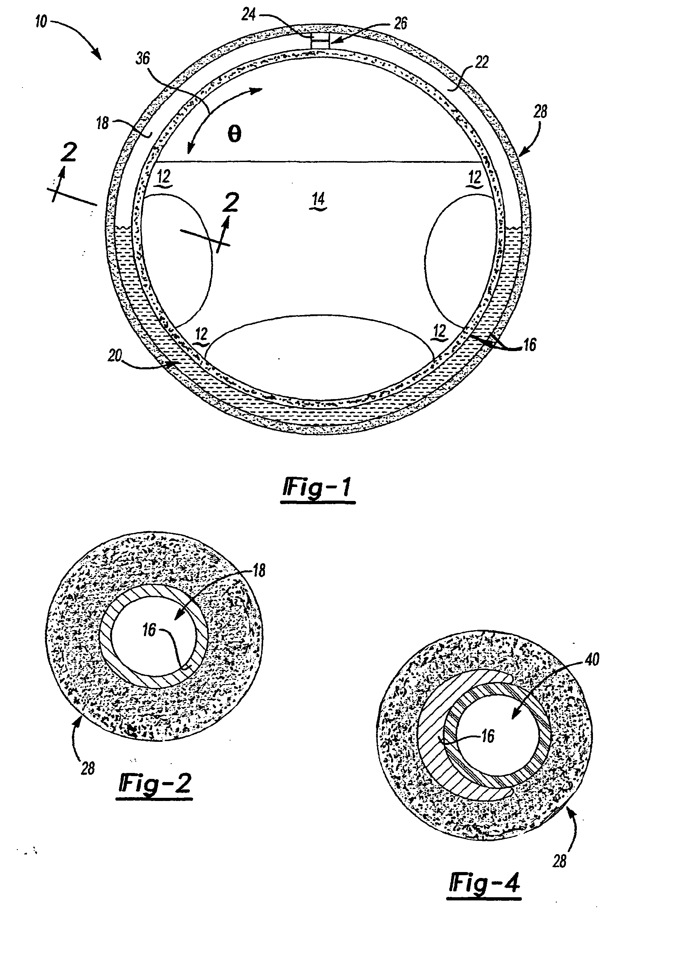

In Figure 1, a steering wheel 10 according to the present invention is shown. Several spokes 12 extend radially from a hub 14 to attach to a rim 16. The rim defines a hollow tube 18 and is shown as two single lines but it will be appreciated that it has a wall thickness as can be seen in Figs.2 and 4. The tube 18 contains a fluid 20, a compressed gas 22, and a rigid plug 24. The rigid plug contains an orifice 26. On the rim 16 a thick plastic covering or casing 28 is arranged which can be gripped by a driver of a vehicle employing the steering wheel.

Referring to Figure 2, a cross-section of the rim 16, and the casing 28 is shown. The tubular rim 16 is the structural member of the steering wheel and is made from tubular steel. In the alternative, aluminium or another metal or non-metals may be used. The hollow tube 18 formed by the rim 16 serves as a fluid chamber. The hollow tube 18 has in this case a circular cross-section. However, the hollow tube 18 may have a more oblong or oval shaped curvature.

Referring to Figure 1, the rigid plug 24 serves as a barrier inside of the tube 18 and is fixed to the tube 18 at the 12 o'clock or top centre steering wheel position. The fluid 20 is free to travel inside of the tube on either side of the rigid plug 24. The compressed gas 22 fills the spaces between the fluid 20 and the rigid plug 24. In the preferred embodiment the fluid is a water glycol mixture. In the preferred embodiment the compressed gas is air.

During normal operation, the steering wheel 10 is in an un-rotated position and the fluid is gathered in the lower portion of the tube as shown in Figure 1 and the rigid plug 24 is at the top centre position. The tube may contain approximately 100 grams of fluid which is free to travel inside the tube. When the steering wheel 10 experiences small rotations in the angular direction, as shown by arrow 36, the rigid plug 24 pushes on the compressed gas 22. The compressed gas acts like a spring and so exerts a force on the fluid 20 gathered in the lower portion of the tube 18. The fluid 20 acts like a mass and the compressed gas spring 22 and the fluid mass 20 resonate at the natural frequency of this single degree of freedom (DOF) system. The stiffness of the compressed gas spring 22 is linearly proportional to the static pressure in the tube. The control of the static pressure in the tube 18 therefore provides a convenient method for tuning the natural frequency of the absorber.

The small orifice 26 in the rigid plug 24 compensates for large, low frequency, steering wheel rotations of greater than 180 degrees. These occurrences may create situations where there is more compressed gas 22 on one side of the fluid 20, than on the other. The orifice 26 allows the static fluid level on each side of the plug to equalize over several seconds by allowing the compressed gas 22 to flow through the orifice 26 but preventing the fluid from flowing through the orifice 26.

The damping of the absorber may also be controlled by the viscosity of the fluid 20 or by changing the surface of the inside of the tube 18. Scoring or roughing the internal surface of the tube effectively acts to change the mass of the system. The damping of the absorber may also be controlled by the diameter of the orifice in the rigid plug.

The following equations describe the required distribution of stiffness and properties among the fluid 20 and compress gas 22 of the present invention.

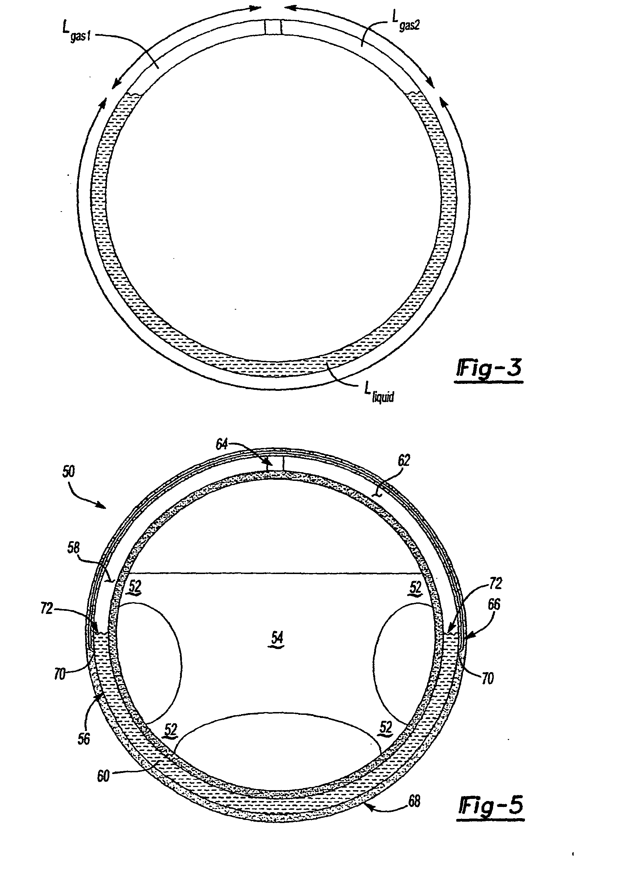

Referring now to Figure 3, the components of the steering wheel rim 16 generally are shown. Assume tube 18 has constant area A and arc lengths $L_{gas1}$, $L_{gas2}$, and $L_{liquid}$.

The basic equation for resonance frequency of a tuned absorber is shown;

$$2\pi f = \sqrt{k/m}$$

Assume tube has constant area A and arc lengths $L_{gas1}$, $L_{gas2}$, and $L_{liquid}$.

The stiffness for each of the two compressible gas chambers;

$$k_1 = \frac{\gamma P_o A}{L_{gas1}} \quad \text{and} \quad k_2 = \frac{\gamma P_o A}{L_{gas2}}$$

where $\gamma$ is the adiabatic constant for the gas and $P_0$ is the mean absolute pressure in the tube.

The stiffnesses of the two compressible gas chambers act in parallel and can therefore be combined;

$$k = k_1 + k_2 = \frac{\gamma P_o A}{L_{gas1}} + \frac{\gamma P_o A}{L_{gas2}} = \frac{2\gamma P_o A}{L_{gas}}$$

when the liquid is centred at the bottom of the wheel $L_{gas1}$ equals $L_{gas2}$.

The mass of the incompressible liquid;

$$m = \rho A L_{liquid}$$

where $\rho$ is the density of the liquid

Resulting equation for resonance frequency of fluidic damper:

$$2\pi f = \sqrt{\frac{2\gamma P_o}{\rho L_{liquid} L_{gas}}}$$

The effectiveness of the steering wheel assembly as a damper is proportional to the rotation inertia of the absorber.

The rotational inertia, I, is dependent on the mass of the absorber, m, and the distance of the centre of rotation to the mass centre, R, are according to the following equation:

$$I = mR^2$$

The large radius, R, which represents where the absorber is located in the system, makes it very effective. Specifically, because the absorber is located at radius R of the steering wheel, it is possible to provide the most attenuation ability with the least amount of added mass as an absorber. This minimizes the amount of addition mass integrated into the overall steering wheel system of the vehicle.

Referring to Figure 3, the rigid barrier at the 12 o'clock position occupies only about 10 mm of chord length, while the liquid column occupies about 300 to 800 mm of chord length. The remainder of the chord length of the steering wheel rim, 300 to 800 mm, contains the pressurized gas that acts as two springs of the damper. Therefore, each pressurized gas spring is about 150 to 400 mm long. The length of these springs is about 10 to 20 times greater than the springs of the mechanical dampers discloses in the prior art. Furthermore, the usable travel for each of the pressurized gas springs is about 125 to 375 mm. This results in a total available travel for the fluid mass of 250 to 750 mm. The travel for some prior art mechanical damper systems is 5 to 10 mm, at which point the mass usually comes in contact with an abrupt non-linearity that restricts its travel. The liquid mass of the present fluid damper can travel back and forth with amplitudes many times that of the excitation amplitude without meeting any abrupt end-of-travel stops.

Figure 4 discloses an alternative embodiment wherein the fluid chamber is no longer a structural member of the rim 16. The rim 16 is made from a magnesium casting that is designed to provide package space for a plastic fluid chamber 40 as shown. The fluid chamber 40 is located next to the rim 16 and is covered by a thick layer of plastic 28. In the alternative, the cast rim 16 may be of an alternative material such as aluminium.

Referring now to Figure 5, an alternative embodiment of the present invention is shown. A steering wheel 50 is generally shown having several spokes 52 extending from a hub 54 and connected to a rim 56 a casing 68 is arranged around the rim 56 which can be gripped by a driver of a vehicle employing the steering wheel the rim 56 is shown as two single lines but it will be appreciated that it has a wall thickness. The rim defines an internal tube 58 equal distant from the hub 54. The internal tube 58 contains a fluid 60, a compressed gas 62, and a rigid plug 64 which in this case is 'solid', that is to say, no fluid or gas can pass through it. The plug itself may be hollow or solid but in either case it is impervious to the passage of gas or fluid. The rigid plug 64 separates two portions of the compressed gas 62. The rigid plug is fixed at the 12 o'clock location. A crossover tube 66 extends between two sides of the rigid plug 64. The cross-over tube 66 allows the system to quickly equalize. The cross-over tube is designed such that at least one end 70 is below the fluid surface 71 when the fluid is equalized. This causes the fluid 20 to block additional compressed gas 22 from entering the cross-over tube 66 so that the system functions correctly.

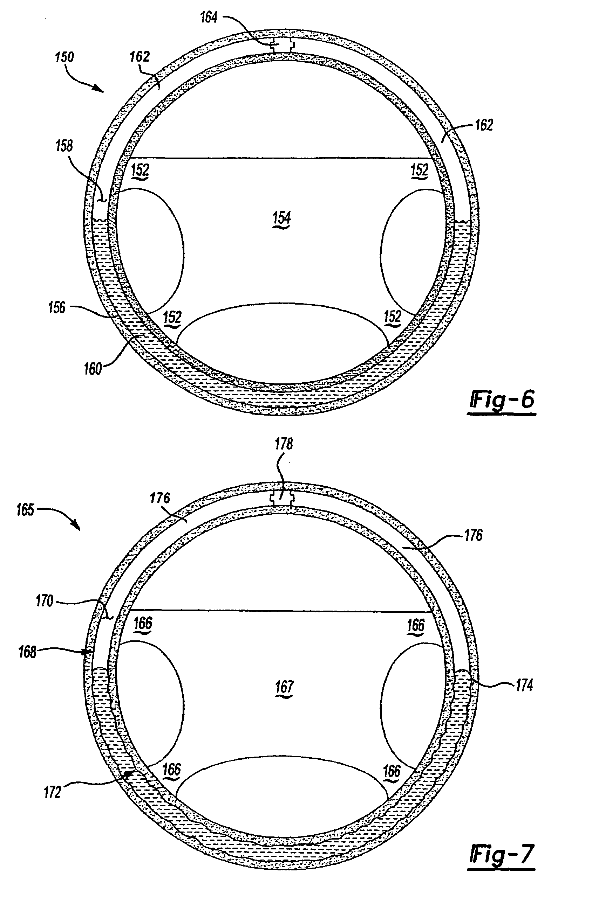

Referring now to Figure 6, an alternative embodiment of the present invention is shown. A steering wheel 150 is generally shown having several spokes 152 extending from a hub 154 and connected to a rim 156 which is shown as two single lines but it will be appreciated that it has a wall thickness. The rim defines an internal tube 158 equal distant from the hub. The internal tube 158 contains a non-newtonian fluid 160, a compressed gas 162, and a rigid plug 164. The non-newtonian fluid 160 may be a gelatin, sludge, or slime. The non-newtonian characteristics of the fluid prevent a gas bubble from travelling through the fluid, eliminating the need for an equalization mechanism. The rigid plug 164 separates two portions of the compressed gas 162 and is a solid plug. The rigid plug 164 is fixed at the 12 o'clock or top centre location.

Referring now to Figure 7, an alternative embodiment of the present invention is shown. A steering wheel 165 is generally shown having several spokes 166 extending from a hub 167 and connected to a rim 168 which is shown as two single lines but it will be appreciated that it has a wall thickness. The rim 168 defines an internal tube 170 equal distant from the hub. The internal tube 170 contains a fluid 172 sealed inside an elongated, doughnut shaped, plastic bag 174, a compressed gas 176, and a rigid plug 178.

The bag 174 contains the fluid 172 in such a way as to prevent a gas bubble from travelling through the fluid. The rigid plug 178 separates two portions of the compressed gas 176. The rigid plug 178 is fixed at the 12 o'clock location. The fluid-in-a-bag design eliminates the need for an equalization mechanism.

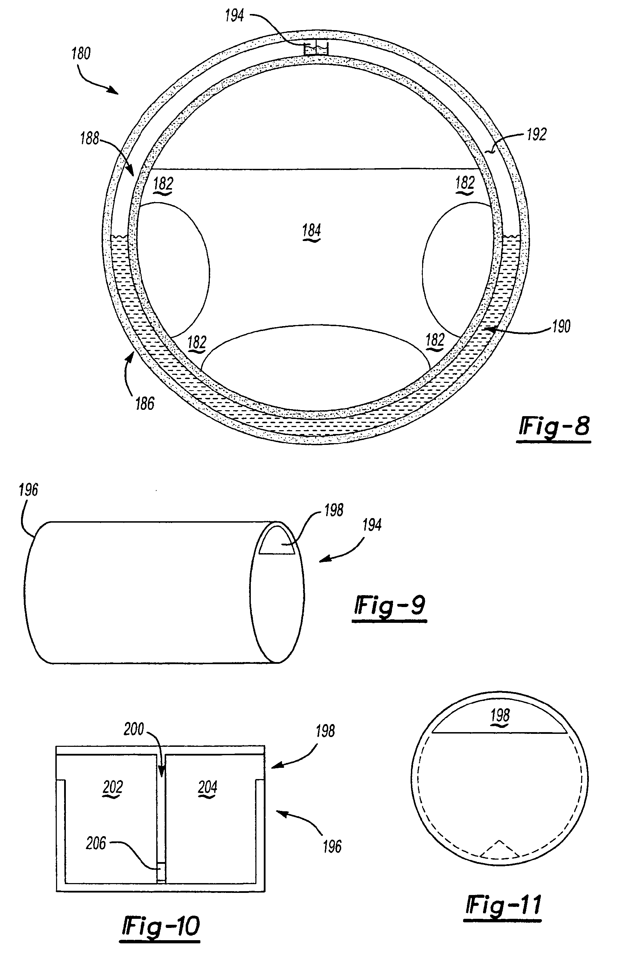

Referring now to Figure 8, an alternative embodiment to the present invention is shown. Steering wheel 180 is generally shown having several spokes 182 extending from a hub 184 and connected to a rim 186. The rim 186 comprises an internal tube 188 equal distant from the hub 184. The internal tube 188 contains a fluid 190, a compressed gas 192 and a trap 194. The trap 194 separates two portions of the compressed gas 192. The trap 194 is fixed at the 12 o'clock position and is better shown in Figures 8-11.

Figures 8-11 provide one embodiment of the trap 194. The trap is contoured to allow for it to mate with the internal tube 188. Two parallel walls 196 form the outer walls of the trap. There are holes 198 at the top of the outer walls 196. A third interior wall 200 is parallel to the outer walls 196 in order to form two adjacent chambers or reservoirs 202, 204. A third hole or orifice 206 is present at the bottom of the interior common wall 200. The trap 194 is designed such that there is always present a small amount of fluid 190 in one or both of chambers 202, 204. When the fluid level in the internal tube 188 is uneven, the pressure differential forces bubbles from one of the adjacent chambers 202, 204 to the other. The fluid 190 plugs up the interior hole 206 in the inner common wall 200 when the system is equalized allowing normal fluid absorber operation.

**Claims**

1. A steering wheel assembly (10) having a tuned absorber for damping vibration comprising a hub (14), a rim (16) connected to the hub (14) by a plurality of spokes (12) extending between the hub (14) and the rim (12), a hollow tube (18) extending around the rim (16) and a liquid (20) located inside the hollow tube (18) to serve as a mass, **characterised in that** a rigid plug (24) is positioned inside the hollow tube (18) to serve as a barrier, and a gaseous substance (22) is interposed within the hollow tube (18) between the liquid (20) and the plug (24), the gaseous substance (22) serving as a spring acting between the plug (24) and the liquid. (20)

2. A steering wheel assembly as claimed in claim 1 wherein the rigid plug (24) is fixed inside the hollow tube at a top centre position.

3. A steering wheel as claimed in claim 1 or in claim 2 wherein the hollow tube (18) is defined by the rim (16).

4. A steering wheel assembly as claimed in claim 1 or in claim 2 wherein the hollow tube is defined by a hollow non-structural member (40) affixed to the rim (16).

5. A steering wheel assembly as claimed in any of claims 1 to 4 wherein the plug (24) is impervious to the liquid and has an orifice (26).

6. A steering wheel assembly as claimed in any of claims 1 to 3 wherein the plug is a solid plug (64) and a conduit (66) is connected to the hollow tube (58) having first and second connecting points (70) on opposite sides of the plug (64) such that at least when the steering wheel assembly is rotated from a straight ahead position, at least one of the connecting points (70) engages the gaseous substance inside the hollow tube at any one time.

7. A steering wheel assembly as claimed in any of claims 1 to 3 wherein the plug (194) is a trap having an orifice (206) connecting together two liquid reservoirs (202,204) each of which retains a limited quantity of liquid within the trap.

8. A steering wheel assembly as claimed in any of claims 1 to 7, wherein the liquid is a mixture of water and glycol.

9. A steering wheel assembly as claimed in any of claims 1 to 3 wherein the plug (164) is impervious to the passage of a gas or liquid and the gaseous substance is interposed between a non-newtonian liquid (160) and the plug (164) inside the hollow tube.

**10.** A steering wheel assembly as claimed in any of claims 1 to 3 wherein the plug (178) is impervious to the passage of a gas or liquid, the liquid is contained in an elongate bag (174) and the gaseous substance is interposed between the bag (174) of liquid and the plug (178).

**11.** A steering wheel assembly as claimed in any of claims 1 to 10 wherein the gaseous substance is compressed air.

**Patentansprüche**

**1.** Eine Lenkradanordnung (10), die einen abgestimmten Dämpfer zur Schwingungsdämpfung aufweist, bestehend aus einem Zentrum (14), einem Rand (16), der mit dem Zentrum (14) über eine Vielzahl von Speichen (12) verbunden ist, die sich zwischen dem Zentrum (14) und dem Rand (12) erstrecken, einem Hohlrohr (18), das um den Rand (16) herum verläuft, und einer Flüssigkeit (20), die sich innerhalb des Hohlrohrs (18) befindet, um als Masse zu dienen, **dadurch gekennzeichnet, dass** ein starrer Pfropfen (24) innerhalb des Hohlrohrs (18) positioniert ist, um als Barriere zu dienen, und eine gasförmige Substanz (22) sich innerhalb des Hohlrohrs (18) zwischen der Flüssigkeit (20) und dem Pfropfen (24) befindet, wobei die gasförmige Substanz (22) als Feder dient, die zwischen dem Pfropfen (24) und der Flüssigkeit (20) wirkt.

**2.** Eine Lenkradanordnung, wie in Anspruch 1 beansprucht, worin der starre Pfropfen (24) innerhalb des Hohlrohrs oben in zentraler Stellung fixiert ist.

**3.** Eine Lenkradanordnung, wie in Anspruch 1 oder Anspruch 2 beansprucht, worin das Hohlrohr (18) durch den Rand (16) definiert ist.

**4.** Eine Lenkradanordnung, wie in Anspruch 1 oder Anspruch 2 beansprucht, worin das Hohlrohr durch ein hohles, nicht strukturelles Teil (40) definiert ist, das am Rand (16) befestigt ist.

**5.** Eine Lenkradanordnung, wie in einem der Ansprüche 1 bis 4 beansprucht, worin der Pfropfen (24) undurchlässig gegenüber der Flüssigkeit ist und eine Öffnung (26) hat.

**6.** Eine Lenkradanordnung, wie in einem der Ansprüche 1 bis 3 beansprucht, worin der Pfropfen ein fester Pfropfen (64) ist und eine Leitung (66) mit dem Hohlrohr (58) verbunden ist, das erste und zweite Verbindungsstellen (70) auf gegenüberliegenden Seiten des Pfropfens (64) aufweist, sodass, zumindest wenn die Lenkradanordnung von einer Geradeausstellung aus gedreht wird, mindestens eine der Verbindungsstellen (70) zu jedem Zeitpunkt die gasförmige Substanz innerhalb des Hohlrohrs erfasst.

**7.** Eine Lenkradanordnung, wie in einem der Ansprüche 1 bis 3 beansprucht, worin der Pfropfen (194) ein Abscheider ist, der eine Öffnung (206) aufweist, die zwei Flüssigkeitsbehälter (202, 204) miteinander verbindet, wovon jeder eine begrenzte Flüssigkeitsmenge innerhalb des Abscheiders zurückbehält.

**8.** Eine Lenkradanordnung, wie in einem der Ansprüche 1 bis 7 beansprucht, worin die Flüssigkeit eine Mischung aus Wasser und Glykol ist.

**9.** Eine Lenkradanordnung, wie in einem der Ansprüche 1 bis 3 beansprucht, worin der Pfropfen (164) undurchlässig gegenüber einem Gas oder einer Flüssigkeit ist, und die gasförmige Substanz sich zwischen einer Nicht-Newtonschen Flüssigkeit (160) und dem Pfropfen (164) innerhalb des Hohlrohrs befindet.

**10.** Eine Lenkradanordnung, wie in einem der Ansprüche 1 bis 3 beansprucht, worin der Pfropfen (178) gegenüber einem Gas oder einer Flüssigkeit undurchlässig ist, die Flüssigkeit in einem länglichen Beutel (174) enthalten ist und die gasförmige Substanz sich zwischen dem Beutel (174) mit der Flüssigkeit und dem Pfropfen (178) befindet.

**11.** Eine Lenkradanordnung, wie in einem der Ansprüche 1 bis 10 beansprucht, worin die gasförmige Substanz Druckluft ist.

**Revendications**

**1.** Ensemble volant (10) muni d'un amortisseur de vibrations accordé pour amortir les vibrations composé d'une plaque centrale (14), d'un rebord (16) raccordé à la plaque centrale (14) par une pluralité de branches (12) s'étendant entre la plaque centrale (14) et le rebord (12), d'un tube creux (18) s'étendant autour du rebord (16) et d'un liquide (20) situé à l'intérieur du tube creux (18) pour servir de masse, **caractérisé en ce qu'**un obturateur rigide (24) est positionné à l'intérieur du tube creux (18) pour servir de barrière et qu'une substance gazeuse (22) est interposée à l'intérieur du tube creux (18) entre le liquide (20) et l'obturateur (24), la substance liquide (22) servant de ressort agissant entre l'obturateur (24) et le liquide (20).

**2.** Ensemble volant selon le procédé de la revendication 1, dans lequel l'obturateur rigide (24) est fixé à l'intérieur du tube creux en position centrale supérieure.

**3.** Ensemble volant selon le procédé de la revendication 1 ou de la revendication 2, dans lequel le tube creux (18) est défini par le rebord (16).

**4.** Ensemble volant selon le procédé de la revendication 1 ou de la revendication 2, dans lequel le tube creux est défini par un élément non structural creux (40) fixé au rebord (16).

**5.** Ensemble volant selon l'une quelconque des revendications 1 à 4, dans lequel l'obturateur (24) est imperméable au liquide et possède un orifice (26).

**6.** Ensemble volant selon l'une quelconque des revendications 1 à 3 dans lequel l'obturateur est un obturateur solide (64) et un conduit (66) est raccordé au tube creux (58) possédant un premier et un deuxième point de connexion (70) sur des côtés opposés de l'obturateur (64) de manière à ce qu'au moins lorsque l'ensemble volant est tourné d'une position droite, l'un des points de connexion (70) pour le moins fait pénétrer la substance gazeuse à l'intérieur du tube creux à tout moment.

**7.** Ensemble volant selon le procédé de l'une quelconque des revendications 1 à 3, dans lequel l'obturateur (194) est un siphon possédant un orifice (206) raccordant deux réservoirs de liquide ensemble (202, 204) dont chacun retient une quantité limitée de liquide au sein du siphon.

**8.** Ensemble volant selon l'une quelconque des revendications 1 à 7, dans lequel le liquide est un mélange d'eau et de glycol.

**9.** Ensemble volant selon l'une quelconque des revendications 1 à 3, dans lequel l'obturateur (164) est imperméable au passage d'un gaz ou de liquide et la substance gazeuse est interposée entre un liquide non newtonien (160) et l'obturateur (164) à l'intérieur du tube creux.

**10.** Ensemble volant selon le procédé de l'une quelconque des revendications 1 à 3, dans lequel l'obturateur (178) est imperméable au passage de gaz ou de liquide, le liquide étant contenu dans un coussin allongé (174) et la substance gazeuse étant interposée entre le coussin (174) de liquide et l'obturateur (178).

**11.** Ensemble volant selon l'une quelconque des revendications 1 à 10, dans lequel la substance gazeuse est de l'air comprimé.

_Fig-1_

_Fig-2_

_Fig-4_

_Fig-3_

_Fig-5_

9

_Fig-6_

_Fig-7_

_Fig-8_

_Fig-9_

_Fig-10_

_Fig-11_

**EP 1 733 949 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6296416 B
- US 20040050203 A
- EP 0414300 A
- WO 2005073051 A
- WO 2005132482 A